# FASCICULE DE BREVET EUROPEEN

(11) **EP 0 784 368 B1**
(45) Date de publication et mention de la délivrance du brevet: **29.08.2001**
(21) Numéro de dépôt: 97400006.9
(22) Date de dépôt: 02.01.1997
(51) Int. Cl.: H02K 1/24

(54) **Rotor magnétoélectrique à griffes**
Klauenpolmagnetoelektrikläufer
Claw pole type magnetoelectric rotor

(30) Priorité: 10.01.1996 FR 9600211
(43) Date de publication de la demande: 16.07.1997
(73) Titulaire: GEC ALSTHOM MOTEURS SA, 54062 Nancy (FR)
(72) Inventeur: Gueraud, Alain, 54280 Seichamps (FR); Mercier, Jean-Charles, 54710 Ludres (FR); Masson, André, 93600 Aulnay Sous Bois (FR)
(74) Mandataire: Gosse, Michel

(56) Documents cités:
- FR-A- 2 087 516
- GB-A- 1 091 253
- US-A- 3 215 878

## Description

L'invention concerne un rotor magnétoélectrique à griffes, et plus particulièrement un rotor magnétoélectrique à griffes destiné à être utilisé dans une machine synchrone rapide.

Ces rotors à griffes sont constitués d'une pluralité d'éléments amagnétiques et magnétiques polarisés solidarisés. Les vitesses qui peuvent être mises en jeu dans certaines machines synchrone rapide peuvent être égales ou supérieures à 50 000 t/mn. Or, comme indiqué ci-dessus, ces rotors sont des assemblages de pièces, de ce fait les constructeurs de rotor à griffes cherchent à obtenir des rotors ayant une résistance à l'éclatement centrifuge la plus élevée possible, tout en conservant un profil aérodynamique optimal.

Il existe des rotors pleins. Leur masse importante limite leur vitesse de rotation. En effet, en rotation, la force centrifuge qui se développe est proportionnelle à la masse en mouvement. Avec ce type de rotor plein il est nécessaire d'utiliser des techniques d'assemblage du type compression isostatique ou équivalent pour que le rotor puisse résister à l'éclatement pour les vitesses de fonctionnement élevées. Ces techniques d'assemblages sont chères et difficilement utilisables dans le cadre d'une production en série. En outre, dans ce type de rotor plein, les pièces constitutives ont des formes compliquées, et leur montage n'est pas facile.

Le brevet français 2 087 516 décrit un rotor de machine électrique synchrone sans contacts qui comporte deux demi-rotors à griffes 2, 3 montés respectivement sur un arbre traversant en deux parties 6, 7 en matériau magnétique, assemblées par une pièce 8 en matériau amagnétique.

La présente invention a pour but de proposer un rotor à griffes compact, de construction simple et par des techniques courantes, pouvant tourner à des vitesses de rotation importantes.

L'invention a ainsi pour objet un rotor à griffes à 2N pôles comprenant deux demi-rotors en matériau magnétique assemblés par au moins une pièce de liaison en matériau amagnétique, chaque demi-rotor comprenant N griffes s'étendant axialement, équidistantes angulairement et définissant entre elles un espace libre ou chaton, les deux demi-rotors étant de polarité opposée et disposés en vis-à-vis, une griffe d'un demi-rotor étant imbriquée entre deux griffes du demi-rotor en vis-à-vis de polarité opposée, caractérisé en ce que ces demi-rotors sont constitués, pour l'un, par une première pièce monobloc en matériau magnétique et pour l'autre par une deuxième pièce monobloc, de même forme que la première, en matériau magnétique, lesdites première et deuxième pièces comprenant lesdites griffes et comprenant, chacune, une queue axiale formant arbre à laquelle se rattachent les griffes de la pièce correspondante, la liaison entre ladite première pièce et ladite seconde pièce étant effectuée par des entretoises amagnétiques interposées entre les extrémités libres des griffes et le fond du chaton du demi-rotor en vis-à-vis, et en ce qu'il comprend en outre des moyens amagnétiques de capotage du rotor.

Avantageusement, chaque griffe comprend une face longitudinale extérieure ayant des zones d'entrefer magnétique progressif radiales.

Chaque griffe d'une pièce magnétique comprend des faces intérieures fuyantes dont le point de convergence est localisé à proximité du centre du chaton.

Chaque griffe comprend une base polygonale au contact du moyeu axial, et une extrémité libre effilée.

Le rotor comprend au moins une pièce monobloc amagnétique pluri-entretoises servant d'entretoise à plusieurs griffes.

Dans un mode de réalisation le rotor comprend avantageusement des doubles entretoises amagnétiques assurant une liaison rigide directe entre les griffes diamétralement opposées.

Un premier avantage du rotor selon l'invention résulte de l'évidement central du rotor dû aux chatons des pièces magnétiques. Cela à pour effet d'alléger le rotor et donc, pour une vitesse équivalente, de développer une contrainte centrifuge inférieure à celle qui serait développée avec un rotor plein.

Un second avantage résulte de l'avantage précédent : les contraintes centrifuges mises en jeu étant inférieures, la solidarisation des différents éléments constitutifs du rotor peut être faite par des techniques de soudage plus classiques et moins onéreuses.

Un autre avantage résulte de la forme particulière des griffes qui permet de limiter d'une part les fuites de flux et d'autre part les contraintes de flexion centrifuges des griffes en rotation.

D'autres avantages de la présente invention résulteront de la description qui va suivre en référence aux dessins annexés dans lesquels :
la figure 1 est une représentation schématique d'une pièce magnétique à deux pôles pour un rotor à quatre pôles selon l'invention.
La figure 2 est une représentation schématique d'une pièce double-entretoises amagnétique constitutive d'un rotor à 4 pôles selon l'invention.

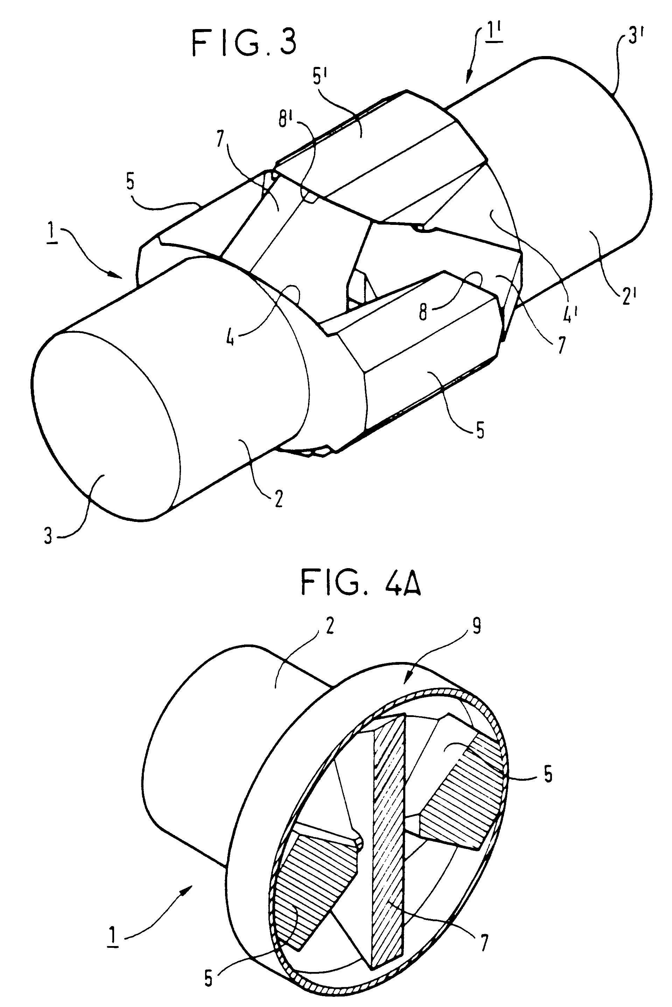

La figure 3 est une représentation schématique d'un rotor à quatre pôles selon l'invention dépourvu de ses moyens de capotage.

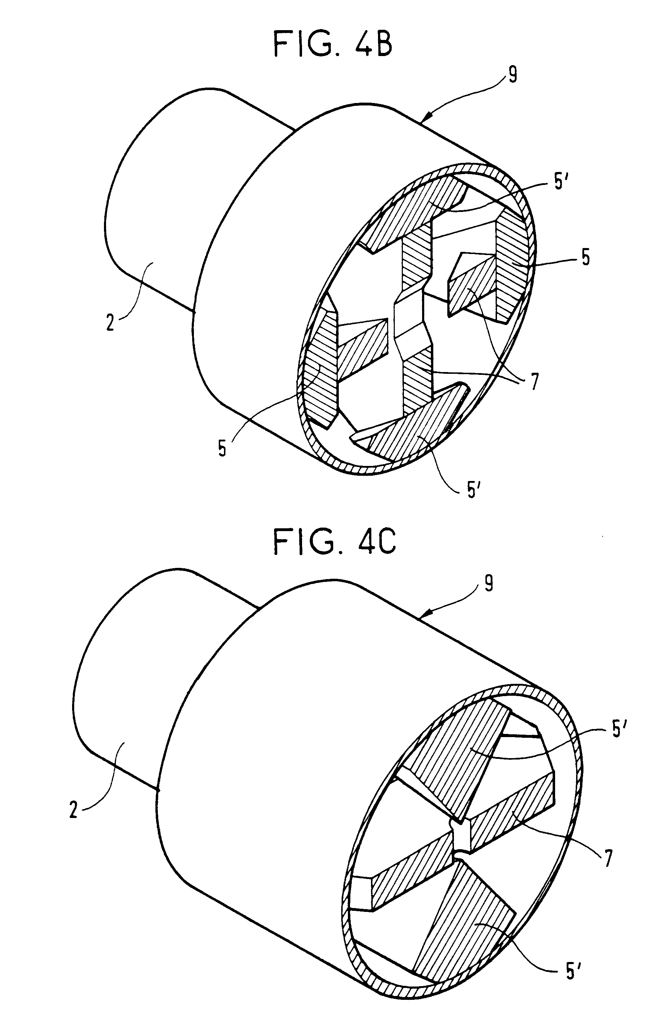

Les figures 4A, 4B, 4C sont des représentations schématiques en coupe transversale d'un rotor à quatre pôles selon l'invention.

Le rotor selon l'invention est conçu de façon qu'il soit le plus léger possible et de construction aisée.

La recherche de la légèreté a conduit à remplacer le maximum de matériau amagnétique par de l'air. La solution proposée par l'invention est un rotor creux ou comportant des évidements, ayant un entrefer magnétique progressif radialement par zone, et un entrefer mécanique aérodynamique constant et lisse.

La recherche d'une construction aisée a conduit à limiter le nombre de pièces constitutives du rotor.

Le rotor à griffes à 2N pôles selon l'invention comprend :
une première pièce en matériau magnétique 1, comprenant un moyeu axial 2 ayant une extrémité libre 3, et une extrémité 4 pourvue de N griffes 5 s'étendant axialement equi-réparties localisées périphériquement, définissant un chaton 6 entre-elles; une seconde pièce en matériau magnétique 1' de polarité opposée à la polarité de la première pièce en matériau magnétique 1, ayant la même forme que la première pièce en matériau magnétique 1, disposé en vis à vis de la première pièce en matériau magnétique 1, chaque griffe 5' de la deuxième pièce en matériau magnétique 1' étant disposée entre deux griffes 5 de la première pièce en matériau magnétique 1, et vice versa ; des entretoises amagnétiques 7 interposés entre les extrémités libres 8, 8' des griffes 5, 5' de chacune des pièces magnétiques 1, 1' et le fond du chaton 6', 6 de la pièce 1', 1 en vis à vis; et
des moyens amagnétiques 9 de capotage du rotor.

Dans le mode de réalisation de l'invention représenté sur les figures, N est égal à 2. Ainsi, l'extrémité 4, (resp. 4') du moyeu 2, (resp. 2') comprend deux griffes 5, (resp. 5') diamétralement opposées.

Les griffes 5, 5' ont une face longitudinale extérieure 10 ayant des zones d'entrefer magnétique progressif radiales.

Dans le mode de réalisation de l'invention représenté sur les figures, la face longitudinale extérieure 10 comprend une zone centrale 11 ayant pour rayon, le rayon extérieur du rotor hors capotage 9, et deux zones latérales chanfreinées 12a, 12b de part et d'autre de la zone centrale 11. Les formes chanfreinées formant des entrefers magnétiques progressifs radiales.

La forme générale de la face longitudinale extérieure 10 résultante permet d'optimiser le passage de flux magnétique entre la zone centrale 11 et le stator de la machine tournante.

Les griffes selon l'invention présentent avantageusement des faces intérieures fuyantes 13 dont le point de convergence 14 est localisé à proximité du centre du chaton 6.

Cette caractéristique a pour but d'aménager un espace amagnétique important entre deux masses magnétiques adjacentes de polarités opposées (griffes adjacentes). Cet espace amagnétique permet de limiter les fuites de flux magnétique passant directement entre deux pôles adjacents de polarités opposées, au lieu de transiter par le stator.

Dans le mode de réalisation représenté sur les figures, les griffes comprennent en outre un agencement des faces tel qu'elles possèdent une base au contact du moyeu axial importante pour reprendre les contraintes de flexion des griffes sous l'action de la force centrifuge, et une extrémité libre effilée pour limiter la masse en mouvement en bout de griffe, et ainsi atténuer lesdites contraintes de flexion à la base.

Les entretoises amagnétiques 7, interposés entre les extrémités libres 8, 8' des griffes 5, 5' de chacune des pièces magnétiques 1, 1' et le fond du chaton 6', 6 de la pièce 1', 1 en vis à vis, ont pour but de créer un espace amagnétique, entre les griffes polarisées d'une des pièces magnétiques et le fond du chaton de l'autre pièce magnétique de polarité opposée, suffisant pour minimiser les pertes de flux magnétique entre les griffes et la pièce opposée.

Ces entretoises amagnétiques 7 ont aussi un rôle mécanique visant à assurer la cohésion axiale et radiale du rotor. Cela est atteint en ce que les entretoises assurent une liaison mécanique rigide entre les extrémités des griffes d'une pièce magnétique et le fond du chaton de l'autre pièce magnétique.

Dans le mode de réalisation représenté sur les figures, il est utilisé des doubles entretoises amagnétiques, qui, outre la liaison rigide entre les extrémités des griffes d'une pièce magnétique et le fond du chaton de l'autre pièce magnétique, assurent une liaison rigide directe entre les griffes diamétralement opposées. Cela participe à l'amélioration de la cohésion radiale du rotor.

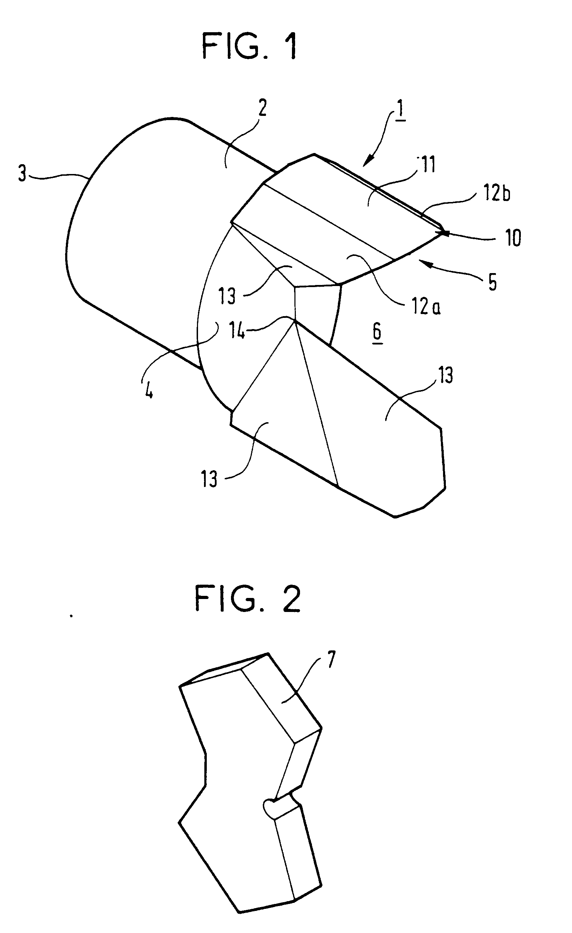

La figure 2 représente une double entretoise monobloc selon l'invention.

Cette double entretoise monobloc a comme caractéristique supplémentaire sa forme équilibrée statiquement et dynamiquement par rapport à l'axe de rotation du rotor.

Ainsi, en rotation, les forces centrifuges s'annulent dans la double entretoise monobloc. Le fait qu'elle soit monobloc apporte encore de la sécurité.

Dans un autre mode de réalisation non représenté, une pièce monobloc unique assure la fonction d'entretoise pour l'ensemble des griffes.

Les entretoises ou pluri-entretoises sont conçues de manière à assurer les fonctions amagnétiques et mécaniques qui leur sont demandées avec un minimum de matière.

La solidarisation des entretoises avec les griffes et/ou les fonds de chaton peut être réalisée par tout moyen connu par exemple du type soudage, vissage, collage. Selon l'invention, les caractéristiques mécaniques nécessaires pour cette solidarisation sont sensiblement moins élevées que pour un rotor plein.

Afin de conserver au rotor un profil aérodynamique optimal, les griffes sont capotées par des moyens amagnétiques de capotage.

Du fait de la construction particulière du rotor, le capotage peut ne pas constituer un élément de cohésion axiale ou radiale du rotor, et donc être en un matériau amagnétique quelconque et d'une épaisseur telle qu'il résiste uniquement à sa propre inertie.

Dans le mode de réalisation représenté sur les figures, les moyens de capotage comprennent un cylindre creux recouvrant les griffes et deux flasques annulaires d'extrémité entourant les moyeux et venant fermer les bases du cylindre.

Bien entendu, l'invention n'est pas limitée au mode de réalisation décrit et représenté, mais elle est susceptible de nombreuses variantes dans le cadre des revendications. En particulier, on pourra, sans sortir du cadre de l'invention, augmenter le nombre de pôles du rotor.

## Revendications

1. Rotor à griffes à 2N pôles comprenant deux demi-rotors (1, 1') en matériau magnétique assemblés par au moins une pièce de liaison en matériau amagnétique (7), chaque demi-rotor comprenant N griffes (5, 5') s'étendant axialement, équidistantes angulairement et définissant entre elles un espace libre ou chaton (6), les deux demi-rotors étant de polarité opposée et disposés en vis-à-vis, une griffe d'un demi-rotor étant imbriquée entre deux griffes du demi-rotor en vis-à-vis de polarité opposée, **caractérisé en ce que** ces demi-rotors sont constitués, pour l'un, par une première pièce (1) monobloc en matériau magnétique et pour l'autre par une deuxième pièce (1') monobloc, de même forme que la première, en matériau magnétique, lesdites première (1) et deuxième (1') pièces comprenant lesdites griffes (5, 5') et comprenant, chacune, une queue (2, 2') axiale formant arbre à laquelle se rattachent les griffes de la pièce correspondante, la liaison entre ladite première pièce (1) et ladite seconde pièce (1') étant effectuée par des entretoises amagnétiques (7) interposées entre les extrémités libres (8, 8') des griffes et le fond du chaton (6) du demi-rotor en vis-à-vis, et en ce qu'il comprend en outre des moyens amagnétiques (9) de capotage du rotor.

2. Rotor selon la revendication 1 **caractérisé en ce que** chaque griffe (5, 5')comprend une face longitudinale extérieure (10) ayant des zones (12a, 12b) d'entrefer magnétique progressif radiales.

3. Rotor selon la revendication 1 ou 2 **caractérisé en ce que** chaque griffe (5, 5') d'une pièce magnétique (1, 1') comprend des faces intérieures fuyantes (13) dont le point de convergence (14) est localisé à proximité du centre du chaton (6, 6').

4. Rotor selon l'une quelconque des revendications 1 à 3 **caractérisé en ce que** chaque griffe (5, 5') comprend une base polygonale au contact du moyeu axial (2), et une extrémité libre (8) effilée.

5. Rotor selon l'une quelconque des revendications 1 à 4 **caractérisé en ce qu**'il comprend au moins une pièce monobloc amagnétique pluri-entretoises (7) servant d'entretoise à plusieurs griffes (5, 5').

## Patentansprüche

1. Rotor mit Klauen mit 2N Polen, umfassend zwei Halbrotoren (1, 1') aus magnetischem Material, montiert durch zumindest ein Verbindungsstück aus amagnetischem Material (7), wobei jeder Halbrotor N Klauen (5, 5') umfasst, die sich axial, winklig äquidistant erstrecken und zwischen sich einen Freiraum oder eine Fassung (6) definieren, wobei die zwei Halbrotoren eine gegensätzliche Polarität haben und gegenüber angeordnet sind, wobei eine Klaue eines Halbrotors zwischen zwei Klauen des gegenüberliegenden Halbrotors mit entgegengesetzter Polarität eingeschoben ist, **dadurch gekennzeichnet, dass** die Halbrotoren einerseits durch ein erstes Monoblockteil (1) aus magnetischem Material und andererseits durch ein zweites Monoblockteil (1') gebildet sind, mit der selben Form wie das erste, aus magnetischem Material, wobei das erste (1) und zweite (1') Teil die Klauen (5, 5') umfasst und jeweils einen axialen Stil (2, 2') umfasst, der einen Träger bildet, an dem die Klauen des korrespondierenden Teils befestigt sind, wobei die Verbindung zwischen dem ersten Teil (1) und dem zweiten Teil (1') durch amagnetische Zwischenstege (7) erfolgt, die zwischen den freien Enden (8, 8') der Klauen und dem Boden der Fassung (6) des gegenüberliegenden Rotors angeordnet sind, und dadurch, dass er darüber hinaus amagnetische Einrichtungen (9) zur Verkleidung des Rotors umfasst.

2. Rotor nach Anspruch 1, **dadurch gekennzeichnet, dass** jede Klaue (5, 5') eine äußere Längsseite (10) hat, die radial, progressive magnetische Luftspaltbereiche hat.

3. Rotor nach Anspruch 1 oder 2, **dadurch gekennzeichnet, dass** jede Klaue (5, 5') eines magnetischen Teils (1, 1') spitz zulaufende Innenseiten (13) umfasst, deren Konvergenzpunkt (14) in der Nähe des Zentrums der Fassung (6, 6') angeordnet ist.

4. Rotor nach einem der vorhergehenden Ansprüche 1 bis 3, **dadurch gekennzeichnet, dass** jede Klaue (5, 5') eine polygonale Basis in Kontakt mit der Axialnabe (2) umfasst, und ein spitzes freies Ende (8).

5. Rotor nach einem der Ansprüche 1 bis 4, **dadurch gekennzeichnet, dass** er zumindest ein amagnetisches Monoblockmehrstegteil (7) umfasst, welches als Zwischensteg für mehrere Klauen (5, 5') dient.

## Claims

1. A 2N pole claw rotor comprising two half-rotors (1, 1') of magnetic material assembled together by at least one link piece (7) of non-magnetic material, each half-rotor comprising N axially-extending and angularly equidistant claws (5, 5') defining between them an empty space or bezel (6), the two half-rotors being of opposite polarities and disposed facing each other, a claw of one half-rotor being disposed between two claws of the facing half-rotor of opposite polarity, the rotor being **characterized in that** one of the half-rotors is constituted by a first one-piece magnetic material part (1) and the other half-rotor is constituted by a second one-piece magnetic material part (1') having the same shape as the first, each of said first and second parts (1, 1') comprising said claws (5, 5') having a shaft-forming axial stem to which the claws of the corresponding part are attached, the link between said first part (1) and said second part (1') being provided by non-magnetic spacers (7) interposed between the free ends (8, 8') of the claws and the end of the bezel (6) of the facing half-rotor, and in that it further comprises non-magnetic rotorcowling means (9).

2. A rotor according to claim 1, **characterized in that** each claw (5, 5') has an outer longitudinal face (10) with progressive radial magnetic air gap zones (12a, 12b).

3. A rotor according to claim 1 or 2, **characterized in that** each claw (5, 5') of a magnetic part (1, 1') has flaring inside faces (13) with a point of convergence (14) located close to the center of the bezel (6, 6').

4. A rotor according to any one of claims 1 to 3, **characterized in that** each claw (5, 5') includes a polygonal base in contact with the axial hub (2), and a tapering free end (8).

5. A rotor according to any one of claims 1 to 4, **characterized in that** it includes at least one one-piece non-magnetic multi-spacer part (7) serving as a spacer for a plurality of claws (5, 5').
